# EUROPEAN PATENT APPLICATION

(11) **EP 0 931 583 A1**
(43) Date of publication of application: **28.07.1999**
(21) Application number: 98310310.2
(22) Date of filing: 16.12.1998
(51) Int. Cl.: B01D 63/10, B01D 67/00

(54) **Spiral wound type membrane module**

(30) Priority: 26.01.1998 JP 1257498
(71) Applicant: KURITA WATER INDUSTRIES LTD., Shinjuku-ku Tokyo (JP)
(72) Inventor: Uemura, Keiji, Shinjuku-ku, Tokyo (JP); Kojima, Takayuki, Shinjuku-ku, Tokyo (JP)
(74) Representative: Jenkins, Peter David

(57) **Abstract**

A spiral wound type membrane module comprising a plurality of membranes wound about a shaft to form a roll of said membranes into which feed water flows via a front end of the roll and from which nonpermeated water flows out via a rear end of the roll, wherein said membrane is made of hydrophilized fluororesin.

## Description

The present invention relates to a spiral wound type membrane module used in a membrane separation device such as a microfiltration device, ultrafiltration device, or reverse osmosis membrane separation device.

As a membrane module used for a membrane separation device, there has been known a spiral wound type membrane module in which separation membranes are wound around the outer circumference of a water collection pipe.

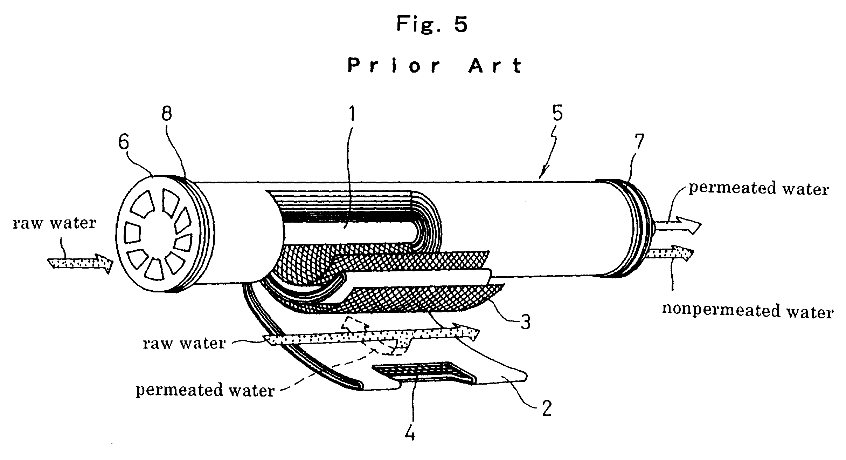

Fig. 5 is a perspective view partly exploded, showing a structure of a conventional spiral wound type membrane module.

A plurality of envelope-like membranes 2 are wound onto a water collection pipe 1 with mesh spacers (outer spacers) 3 being put between the membranes.

The water collection pipe 1 is provided with a slit-like opening for allowing the communication between the outside and the inside of the pipe. The membranes 2 are each formed in an envelop shape, inside of which communicates with the inside of the water collection pipe 1. Inserted into each envelope-like membrane 2 is an inside spacer 4 such as mesh-like spacer, for forming a channel inside the membrane, so that the inside of the envelope-like membrane (hereinafter, sometimes referred to as just "membrane") 2 constitutes a permeated water channel.

The opposite ends of a roll 5 of the membranes 2 are dosed with a top ring 6 and an end ring 7 at its flanges and brine seals 8 are fitted around the top ring 6 and the end ring 7.

Feed water (raw water) flows from the front end of the roll 5 into each feed water channel between the membranes 2 and further flows in the longitudinal direction of the membrane roll 5. Nonpermeated water is outputted from the rear end of the membrane roll 5. During the water passes in the feed water channels, the water permeates through the membranes 2 and flows into the pipe 1 and is taken out from the rear end of the pipe 1 as permeated water.

One of materials of the membrane is fluororesin including PTFE (polytetrafluoroethylene). The membrane made of fluororesin is supreme in chemical resistance in comparison with other material including polyester, so that raw water containing chlorine, hydrogen peroxide or the like can be treated as well as other raw water.

However, the conventional membrane consisted of fluororesin is hydrophobic so that it has a low rate of permeated water.

The conventional spiral wound type membrane module has also the following detects:
1) The water collection pipe 1 must have larger diameter to obtain a great flux within the pipe 1. However, this also makes the diameter of the spiral wound type membrane module larger.
2) The permeated water flows in each membrane spirally to the water collection pipe 1, so that a flow resistance increases in the membrane. A flow resistance is also high around the slit-like openings through which the permeated water flows from the inside of the membrane into the water collection pipe.
3) A volume of the feed water flowing in the feed water channels decreases as the feed water flows to the outlet by permeation into the membranes, and a flow velosity of the feed water becomes small in a downstream region of the feed water channels whereby the membranes are easy to be foulded therearound.

It is an aim of the present invention to provide a spiral wound type membrane module provided with membranes made of fluororesin capable of producing permeated water at a high rate.

It is another aim of the present invention to provide a spiral wound type membrane module which can eliminate a water collection pipe, have larger membrane area, and yet obtain greater flux, into which raw water flows via a front end thereof and from which permeated water flows out via a rear end thereof.

A spiral wound type membrane module of the present invention comprises a plurality of membranes wound about an axis of the module to form a roll of the membranes into which feed water flows via a front end of the roll and from which permeated water flows out via a rear end of the roll. The membranes are made of hydrophilized fluororesin.

The thus constituted spiral wound type membrane module of the present invention can produce at a high rate since the membranes thereof are made of hydrophilized fluororesin which also improves chemical resistance of the membrane module.

The membranes of fluororesin can be hydrophilized by an IPA method wherein the membranes of fluororesin are immersed in isopropyl alcohol (IPA). The membranes may be hydrophilized by a surface-active agent method wherein the membranes of fluororesin are immersed in a solution including an aqueous solution of surface-active agent. The agent may be sodium dodecylbenzenesulfonate. The membranes may be hydrophilized also by a mechanochemical method wherein highly pressurized water of more than 6kg/cm² is fed to a raw water side of the membranes to hydrophilize a surface of the membranes mechanochemically. The concentration of the aqueous solution of the surface-active agent may be between 0.01 wt% and 0.05 wt%. Each of pure IPA and an aqueous solution containing IPA in a concentration of more than 50% can be used in the above IPA method. The membranes are preferable to be in contact with IPA or the solution of the surface-active agent for more than 0.1 minutes preferably for 3 to 60 minutes. When the membranes of fluororesin are hydrophilized by the highly pressurized water, the membranes are preferable to be in contact with the pressurized water for more than 0.1 minutes preferably for 3 to 60 minutes.

In one embodiment of the spiral wound type membrane module of the invention, a permeated water spacer for forming permeated water channels may be disposed inside each envelop-like membrane and a feed water spacer for forming feed water channels may be disposed between the membranes. Each membrane may be formed in a substantial rectangle having first, second, third and fourth sides, the first, second and third sides being closed and the fourth side being partly opened to have an opening and closed at the rest thereof to have a blocking portion. The membranes are wound onto a shaft of the module to form a membrane roll in such a manner that the first sides perpendicular to the fourth sides are in contact with the shaft and the fourth sides are exposed on the rear end of the membrane roll, and the second sides opposite to the fourth sides are exposed on the front end of the membrane roll. Each feed water channel between the membranes is closed along the entire of the third side, closed to have a blocking portion along a portion of the fourth side corresponding to the opening of the membrane, and opened to have an opening along a portion of the fourth side corresponding to the blocking portion of the membrane.

In the thus constituted spiral wound type membrane module, raw water flows from the front end of the roll into the feed water channels. The raw water flows in the feed water channels in a direction substantially parallel to the axis of the membrane roll and is taken out as nonpermeated water from the openings of the feed water channels on the rear end of the roll.

Water permeated through the membranes flows in the membranes in a direction substantially parallel to the axis of the roll and is taken out from the opening formed on the rear end of the roll.

Since the permeated water flows in the membranes in the direction parallel to the axis of the roll as mentioned above, a water collection pipe used in a conventional spiral wound type membrane module is no longer necessary. This can avoid the flowing resistance of the water when flowing from the membranes into the water collection pipe, thereby significantly reducing the flowing resistance of the permeated water.

As the water collection pipe can be eliminated, the length of the membrane in the winding direction can be increased so as to increase the membrane area. Even with the membrane having increased length in the winding direction, the flowing resistance of the permeated water does not increase. This allows greater flux to be obtained.

Each feed water channel is opened just along a portion of the rear end of the roll so that the flow rate of feed water (nonpermeated water) at the downstream of the feed water channel can be higher than that of the conventional one, thereby also preventing the fouling at the downstream of the feed water channel.

An embodiment of the present invention will now be described, by way of example only, with reference to the accompanying drawings in which:-
Fig. 1a is a perspective view showing one of envelope-like membranes according to an embodiment;
Fig. 1b is a sectional view taken along the line B-B of Fig. 1a;
Fig. 1c is a sectional view taken along the line C-C of Fig. 1a;
Fig. 2 is a sectional view illustrating a way of winding the membranes of a spiral wound type membrane module according to the embodiment;
Fig. 3 is a perspective view showing the engagement between the membrane roll and a socket; and
Fig. 4 is a side view of the spiral wound type membrane module according to the embodiment.
Fig. 5 is a perspective view showing the structure of a conventional spiral wound type membrane module;

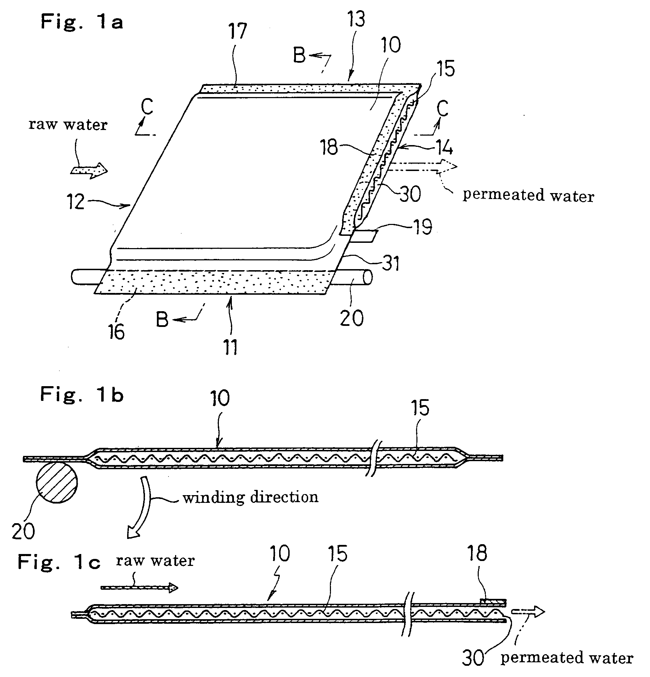

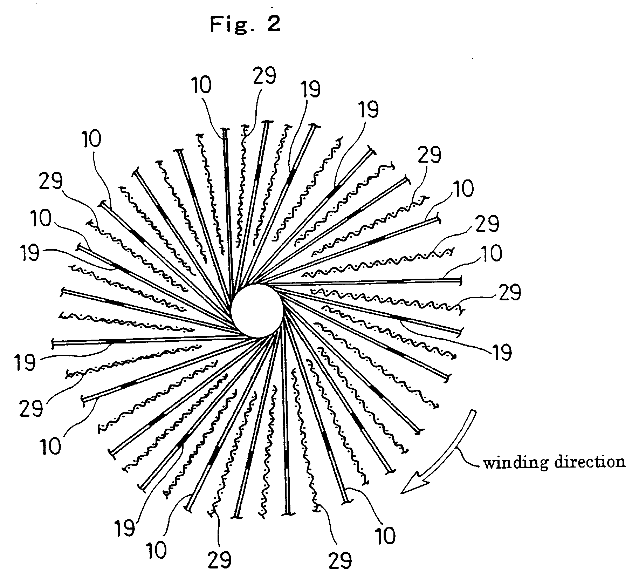

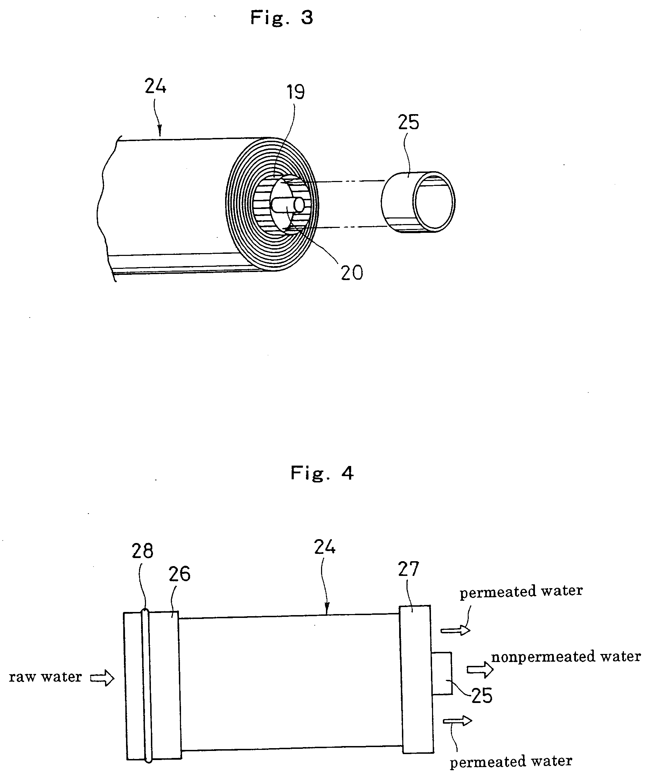

Fig. 1a is a perspective view showing one of envelope-like membranes and a shaft onto which the membranes are wound, which are used in a spiral wound type membrane module of an embodiment of the present invention. Figs. 1b and 1c are sectional views taken along the line B-B and the line C-C of Fig. 1a, respectively. Fig. 2 is a sectional view illustrating a way of winding the membranes around the circumference of the shaft, Fig. 3 is a perspective view showing the engagement between the membrane roll and a socket, and Fig. 4 is a side view of the spiral wound type membrane module.

The material of the envelope-like membranes is fluororesin including PTFE, and the surface of the membranes is hydrophilized.

As shown in Figs. 1a to 1c, each envelop-like membrane 10 according to this embodiment is formed in a square or rectangle having a first side 11, a second side 12, a third side 13, and a fourth side 14. The membranes 10 are bonded to each other along the first side 11 and the third side 13 with adhesives and are not bonded to each other along a part of the fourth side 14.

The halves of the membrane film are not bonded to each other along a part of the fourth side 14 from a halfway of the fourth side 14 to the third side 13 to form an outlet 30 for permeated water. The halves of the membrane film are bonded to each other along a rest of the fourth side 14 from the halfway of the fourth side 14 to the first side 11 so as to form a blocking part 31 for blocking the flow of the permeated water.

Disposed inside the membrane 10 is a spacer (for example, comprising a mesh spacer) 15 for forming a channel inside the membrane 10. Instead of the above membrane film 10 a long sheet of a membrane film having four sides 11, 12, 13, 14 may be employed, wherein the long sheet is folded at the second side 12 into two halves, and the membrane films are bonded along the first side 11, the second side 12, the third side 13, and a part of the forth side 14 to each other.

Adhesive 16 is applied to one surface of the membrane 10 and adhesives 17, 18 are applied to the other surface of the membrane 10. A plurality of such membranes 10 are wound around the circumference of a shaft 20 to form a membrane roll. The adhesive 16 is applied along the first side 11 and the adhesive 17 is applied along the third side 13. The adhesive 18 is applied from the halfway of the fourth side 14 to the third side 13 along the outlet 30 for permeated water.

Upon winding the plurality of membranes 10 onto the shaft 20, the membranes 10 superposed on each other are watertightly bonded to each other at portions where the adhesives 17, 18 are applied. Therefore, a feed water channel is formed between every adjacent two of the membranes 10. As the adhesive 18 sets, on the rear end of the membrane roll, an outlet for raw water (nonpermeated water) is formed inside and a blocking part for blocking the flow of raw water is formed outside.

Each fin 19 is disposed to extend backward from a boundary between the outlet 30 for permeated water and the blocking part 31 for blocking the flow of permeated water. The fin 19 may be made of a synthetic resin film or sheet and is preferably bonded to the membrane 10 with adhesives.

The membranes 10 are wound around the circumference of the shaft 20 by way of mesh spacers 29 as shown in Fig. 2 so as to form the membrane roll 24 as shown in Fig. 3. The fins 19 project from the rear end of the roll 24. The fins 19 are disposed at the same portions on the fourth side 14 of the respective membranes 10 in such a manner that the fins 19 are positioned apart from the axis of the roll 24 at the same distance in the radial direction and the fins 19 are partly superposed on each other so as to constitute a ring-like protrusion. Inserted into the ring-like protrusion is the rear end of a cylindrical socket 25. The socket 25 and the fins 19 are then bonded to each other by adhesives. The socket 25 may be fitted to the outside of the protrusion made by the fins 19. Instead of the fins 19, the roll 24 may be provided with a slit formed at a portion corresponding to the fins 19 by a lathe and the socket 25 may be embedded into the slit.

The socket 25 and the fins 19 are bonded to each other so that the rear end of the roll 24 is divided into an outlet area for permeated water outside the socket and an outlet area for nonpermeated water inside the socket 25.

Before winding the membranes 10 onto the shaft 20, spacers (including mesh spacers) 29 are disposed between the membranes 10 as shown in Fig. 2. By disposing the mesh spacers 29 between the membranes 10, the feed water channel is formed.

As shown in Fig. 4, a top ring 26 and an end ring 27 are formed at both ends of the roll 24 by synthetic resin molds or the like and brine seal 28 are fitted to the periphery of the top ring 26.

In the thus constituted spiral wound type membrane module, feed water is supplied from the front end of the roll 24 into the feed water channel between the membranes 10 as shown in Fig. 4. The feed water flows in the channel in the direction almost parallel to the axis of the roll 24 and is then taken out from the area inside the socket 25 at the rear end of the roll 24. During the feed water flows in the feed water channels in this manner, the water permeates through the membranes 10 so that the permeated water is taken out from the area outside the socket 25 at the rear end of the roll 24.

The membrane module is supreme in chemical resistance and has large flux (a high rate of permeated water) since the membranes 10 are made of hydrophilized fluororesin.

In this module, since the permeated water flows through the membranes 10 in the direction parallel to the axis of the roll 24 and is taken out from the rear end, a water collection pipe used in a conventional spiral wound type membrane module is no longer necessary. Therefore, this can avoid the flowing resistance of the water when flowing from the membranes into the water collection pipe, thereby significantly reducing the flowing resistance of the permeated water.

As the water collection pipe can be eliminated, the length of the membrane 10 can be increased in the winding direction so as to increase the membrane area. Even with the membrane having increased length in the winding direction, the flowing resistance of the permeated water is not grown up. This allows greater flux to be obtained.

The outlet area for raw water is only positioned inside the socket 25. That is, the module has such a structure that the outlet of the feed water channel (i.e. the downstream) are narrowed. Therefore, high flow rate of feed water (nonpermeated water) is obtained even in the downstream of the feed water channel, thereby preventing the fouling at the downstream of the feed water channel. The areas inside and outside the socket 25 (the length of the adhesive 18 along the fourth side 14) are preferably decided corresponding to the rate of permeated water collection in this spiral wound type membrane module.

Since the socket 25 is connected to the roll 24 by using the fins 19, the bond strength between the socket 25 and the roll 24 is high. The outlet area for permeated water and the outlet area for nonpermeated water are watertightly divided from each other by the socket 25.

When the membrane module is backwashed, gas pressure is applied to the permeated water channels in the membranes 10 of the module. The permeated water which is resident in the membranes 10 is pushed to flow into the feed water channels, and thus the module is backwashed by water at first. When the gas is continued to be fed (it may be fed continuously or intermittently), the volume of the resident permeated water becomes small, and the permeated and the gas flow into the feed water channels in a mixed phase to achieve a gas-water binary phase backwash. When almost all permeated water has flown out from the permeated water channels into feed water channels, only the gas flows from the permeated water channels into the feed water channels to achieve a gas backwash.

Though the outlet area for permeated water is disposed outside the socket 25 and the outlet area for nonpermeated water is disposed inside the socket 25 in this embodiment, conversely the outlet area for permeated water may be disposed inside the socket 25 and the outlet area for nonpermeated water may be disposed outside the socket 25.

The present invention will be described with reference to examples and a comparative example.

### Example 1

The spiral wound type membrane module as illustrated in Figs.1a to 4 is employed in this example where the membrane is made of hydrophilized PTFE. The membrane is hydrophilized by being immersed in pure IPA at a room temperature for 30 minutes.

The module has a total area of the membranes of 0.87m². A diameter of the membrane roll is 10cm and a length is 40cm.

City water as raw water was fed to the module at a pressure of 0.4kg/cm² and a rate of 20 m³/m²/day. A mean rate of permeated water (flux) was measured and found to be 20 m³/m²/day

### Comparative example 1

The same experiment as the example 1 was conducted except that the membranes were not hydrophilized. A mean flux was 0.1 m³/m²/day which was much smaller than the example 1.

### Example 2

The same experiment as the example 1 was conducted but that the PTFE membranes were hydrophilized by being immersed in an aqueous solution of sodium dodecylbenzenesulfonate of 0.03% at a room temperature for 30 minutes. The flux was 20 m³/m²/day.

As shown by the above examples and comparative examples, the spiral wound type membrane module of the present invention is supreme in chemical resistance and has large flux since the module employs the membranes made of hydrophilized fluororesin. In the module of the present invention, the water collection pipe is no longer necessary and the flowing resistance of permeated water is small. In addition, it can increase the membrane area.

## Claims

1. A spiral wound type membrane module comprising a plurality of membranes wound about an axis of the module to form a roll of said membranes and to form feed water channels between said membranes into which feed water flows via a front end of the roll and from which permeated water flows out via a rear end of the roll,
wherein said membrane is made of hydrophilized fluororesin.

2. A spiral wound type membrane module as claimed in claim 1, wherein said module comprises a plurality of membranes having a form of an envelope,
wherein each membrane is formed in a substantial rectangle having first, second, third and fourth sides, the first, second and third sides being closed and the fourth side being partly opened to have an opening and closed at a rest thereof to have a blocking portion,
wherein the membranes are wound onto a shaft of the module to form a roll so that each first side perpendicular to the fourth side is in contact with the shaft and each fourth side is exposed on a rear end of the roll, and each second side opposite to the fourth side is exposed on the front end of the roll,
wherein each feed water channel between the membranes is closed entirely along the third side, closed to have a blocking portion along a portion of the fourth side corresponding to the opening of the membrane, and opened along a portion of the fourth side corresponding to the blocking portion of the membrane.

3. A spiral wound type membrane module as claimed in claim 2, wherein the openings of the membranes are positioned in one of outside and inside annular portions of the rear end of the membrane roll and the openings of the feed water channels are positioned in the other portion of the rear end of the membrane roll, and
further comprising a ring member, connected to the rear end of the roll, for separating permeated water flowing out from the openings of the membranes and nonpermeated water flowing out from the openings of the feed water channels.

4. A spiral wound type membrane module as claimed in any of claims 1 to 3, wherein permeated water spacers for forming permeated water channels are disposed inside the membranes, and feed water spacers for forming said feed water channels are disposed between the membranes.

5. A spiral wound type membrane module as claimed in any of claims 1 to 4, wherein said fluororesin is polytetrafluoroethylene.

6. A spiral wound type membrane module as claimed in any of claims 1 to 5, wherein said membrane is hydrophilized by being immersed in isopropyl alcohol.

7. A spiral wound type membrane module as claimed in claim 6, wherein said isopropyl alcohol is pure isopropyl alcohol.

8. A spiral wound type membrane module as claimed in claim 6, wherein said isopropyl alcohol is an aqueous solution of isopropyl alcohol with a concentration of more than 50%.

9. A spiral wound type membrane module as claimed in any of claims 1 to 5, wherein said membranes are hydrophilized by being immersed in a solution of a surface-active agent.

10. A spiral wound type membrane module as claimed in claim 9, wherein said surface-active agent is sodium dodecylbenzenesulfonate.

11. A spiral wound type membrane module as claimed in claim 9 or 10, wherein said solution is an aqueous solution.

12. A spiral wound type membrane module as claimed in claim 11, wherein said solution has a concentration of 0.01 to 0.05 wt.%.

13. A spiral wound type membrane module as claimed in any of claims 6 to 12, wherein said membranes are immersed for more than 0.1 minutes.

14. A spiral wound type membrane module as claimed in any of claims 1 to 5, wherein said membrane is hydrophilized by being in contact with highly pressurized water.

15. A spiral wound type membrane module as claimed in claim 14, wherein said water has a pressure of more than 6kg/cm².
